# EUROPEAN PATENT APPLICATION

(11) **EP 2 309 709 A1**
(43) Date of publication of application: **13.04.2011**
(21) Application number: 10152872.7
(22) Date of filing: 08.02.2010
(51) Int. Cl.: H04M 1/725

(54) **Method for indicating a volume of an audio sink of a portable electronic device**

(30) Priority: 08.10.2009 US 249938 P
(71) Applicant: RESEARCH IN MOTION LIMITED, Waterloo, Ontario N2L 3W8 (CA)
(72) Inventor: Hardy, Michael, Thomas, Waterloo Ontario N2L 5Z5 (CA); Patterson, Andrew, Robert, Waterloo Ontario N2L 5Z5 (CA); Fahmy, Samer, Waterloo Ontario N2L 5Z5 (CA)
(74) Representative: MERH-IP Matias Erny Reichl Hoffmann

(57) **Abstract**

A method includes rendering data for display on a display screen of a portable electronic device and rendering an overlay for display on the display screen, the overlay being superimposed over the data and including a volume indicator and an audio sink indicator.

## Description

### Technical Field

The present embodiments relate to visual identification of audio sink volume on a portable electronic device.

### Background

Portable electronic devices are capable of sending audio output to several different audio sinks including internal speakers, wired auxiliary devices such as headsets and speakers, for example, and wireless auxiliary devices that communicate with the portable electronic device over a wireless protocol such as Bluetooth™, for example.

Controlling the volume of the different audio sinks on the portable electronic device is typically performed by depressing individual volume up/down keys or manipulating a trackball or a thumbwheel to increase or decrease the volume. Volume adjustment is associated with the default audio sink of the portable electronic device, which for most devices is the internal speaker. When another audio sink is enabled by, for example, plugging a headset into the device, the volume adjustment becomes associated with the new audio sink.

Users who frequently switch between audio sinks generally have to adjust the volume each time a new audio sink is enabled. A current volume level may not be desired and may even cause the user some discomfort when a new sink is activated. For example, a user listening to music from a loudspeaker at a very high volume must rush to adjust the volume when headphones are plugged in to avoid being blasted with music at an undesired high level.

### Summary

There is provided herein a method including: rendering data for display on a display screen of a portable electronic device and rendering an overlay for display on the display screen, the overlay being superimposed over the data and comprising a volume indicator and an audio sink indicator.

There is provided herein a portable electronic device including: a processor for rendering data for display on a display screen of the portable electronic device and rendering an overlay for display on the display screen, the overlay comprising a volume indicator and an audio sink indicator and being superimposed over the data; and a volume adjustment device in communication with the processor, the volume adjustment device for communicating with a media player application stored in a memory of the portable electronic device; wherein active audio sink and current volume level of the active audio sink is obtained from the media player application.

### Drawings

The following figures set forth embodiments in which like reference numerals denote like parts. Embodiments are illustrated by way of example and not by way of limitation in the accompanying figures.

Figure 1 is a block diagram of a portable electronic device according to an embodiment;

Figure 2 is a front view of the portable electronic device of Figure 1;

Figure 3 is a block diagram including a media player application of the portable electronic device of Figure 1;

Figure 4 is a view of a display screen of the portable electronic device of Figure 1 showing an overlay indicating a speaker volume;

Figures 5A-5C are views of the overlay of Figure 4 according to alternative embodiments;

Figure 6 is a view of a display screen of the portable electronic device of Figure 1 showing an overlay indicating a headset volume;

Figures 7A-7C are views of the overlay of Figure 6 according to alternative embodiments;

Figure 8 is a view of a display screen of the portable electronic device of Figure 1 showing an overlay indicating a Bluetooth™ device volume;

Figures 9A-9D are views of the overlay of Figure 6 according to alternative embodiments;

Figure 10 is a view of a display screen of the portable electronic device of Figure 1 showing an overlay including a volume control indicator;

Figure 11 is a view of a display screen of the portable electronic device of Figure 1 showing an overlay indicating a Bluetooth™ device volume and power level;

Figure 12 is a flowchart depicting a method of operating the portable electronic device of Figure 1 according to an embodiment; and

Figure 13 is a flowchart depicting a method of operating the portable electronic device of Figure 1 according to another embodiment.

### Detailed Description

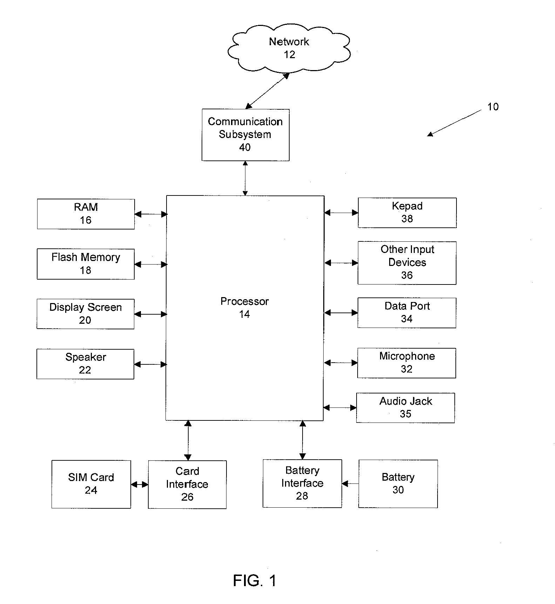

Referring now to Figure 1, components of a portable electronic device 10 according to an embodiment are generally shown. The portable electronic device 10 includes data communication capabilities and may communicate with other electronic devices directly or through a wireless network. The portable electronic device 10 is based on the computing environment and functionality of a handheld computer, such as a wireless personal digital assistant (PDA), for example. It will be understood, however, that the portable electronic device 10 is not limited to a wireless personal digital assistant. Other portable electronic devices are possible, such as cellular telephones, smart telephones, electronic messaging devices and laptop computers.

The portable electronic device 10 includes a number of components including processor 14, which controls the overall operation of the device 10. A communication subsystem 40 controls data and voice communication functions, such as email, PIN (Personal Identification Number) message functions, SMS (Short Message Service) message functions and cellular telephone functions, for example. The communication subsystem 40 is in communication with a wireless network 12, which may be a data-centric wireless network, a voice-centric wireless network or a dual-mode wireless network.

In Figure 1, the communication subsystem 40 is a dual-mode wireless network that supports both voice and data communications. The communication subsystem 40 is configured in accordance with the Global System for Mobile Communication (GSM) and General Packet Radio Services (GPRS) standards. The communication subsystem 40 may alternatively be configured in accordance with Enhanced Data GSM Environment (EDGE) or Universal Mobile Telecommunications Service (UMTS) standards. Other wireless networks may also be associated with the portable electronic device 10, including Code Division Multiple Access (CDMA) or CDMA2000 networks. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The wireless network 12 includes base stations (not shown) that provide a wireless link to the portable electronic device 10. Each base station defines a coverage area, or cell, within which communications between the base station and the portable electronic device 10 can be effected. It will be appreciated that the portable electronic device 10 is movable within the cell and can be moved to coverage areas defined by other cells. Data is delivered to the portable electronic device 10 via wireless transmission from the base station. Similarly, data is sent from the portable electronic device 10 via wireless transmission to the base station.

The communication subsystem 40 further includes a short range communications function, which enables the device 10 to communicate directly with other devices and computer systems without the use of the wireless network 12 through infrared or Bluetooth™ technology, for example.

Prior to the portable electronic device 10 being able to send and receive communication signals over the wireless network 12, network registration or activation procedures must have been completed. In order to enable network communication, a SIM (Subscriber Identity Module) card 24 is inserted into a card interface 26. The SIM card, or Removable User Identity Module card, is used to identify the user of the mobile device, store personal device settings and enable access to network services, such as email and voice mail, for example, and is not bound to a particular portable electronic device 10.

The processor 14 is also connected to a Random Access Memory (RAM) 16 and a flash memory 18. An operating system and device software are typically stored in flash memory 18 and are executable by the processor 14. Some device software components may alternatively be stored in RAM 16. The portable electronic device 10 includes computer executable programmed instructions for directing the portable electronic device 10 to implement various applications. Some examples of applications that may be stored on and executed by the device 10 include: electronic messaging, games, calendar, address book and music player applications. Software applications that control basic device operation, such as voice and data communication, are typically installed during manufacture of the device 10. For devices that do not include a SIM card 24, user identification information may be programmed into the flash memory 18. The flash memory 18 may alternatively be a persistent storage, a Read-Only Memory (ROM) or other non-volatile storage.

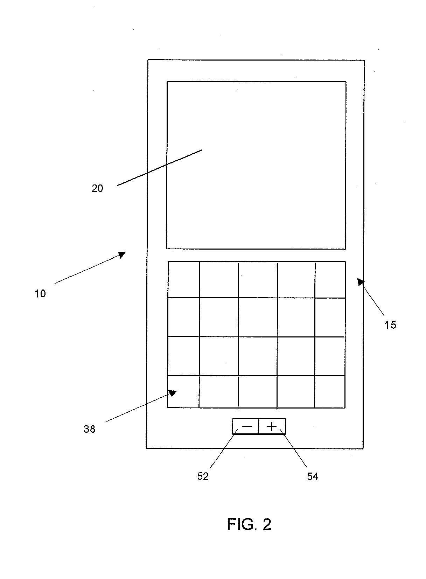

Referring also to Figure 2, the processor 14 receives input from various input devices including a keypad 38 and other input devices 36. The keypad 38 may be a complete alphanumeric keypad or telephone-type keypad. The other input devices 36 may replace or complement the keypad 38 to facilitate input and may include devices such as: single or multi-function buttons, a touch screen, a mouse, a trackball, a capacitive touch sensor or a roller wheel with dynamic button pressing capability. The portable electronic device 10 of Figure 2 is shown by way of example and it will be appreciated by a person skilled in the art that many different device types, shapes and input device configurations are possible.

The processor 14 outputs to various output devices including an LCD display screen 20. A microphone 32 and speaker 22 are connected to the processor 14 for cellular telephone functions. A data port 34 is connected to the processor 14 for enabling data communication between the portable electronic device 10 and another computing device. The data port 34 may include data lines for data transfer and a supply line for charging a battery 30 of the portable device 10. Battery interface 28 is provided for receiving one or more rechargeable batteries 30.

The portable electronic device 10 is operable in a data communication mode and a voice communication mode. In the data communication mode, a received data signal representing information such as a text message, an email message, a media file to be transferred, or web page download is processed by the communication subsystem 40 and input to the processor 14. The processor 14 further processes the signal and renders images for display on the display screen 20. Alternatively, the processed signals may be output to another computing device through the data port 34. In order to transmit information in the data communication mode, the user of the portable electronic device 10 composes information for transmission, such as email messages, for example, using the keypad 38 and other input devices 36 in conjunction with the display screen 20. The composed information is transmitted through the communication subsystem 40 over the wireless network 12 or via short range communications. Operation of the portable electronic device 10 in the voice communication mode is similar to the data communication mode, however, the received signals are output to the speaker 22, or an auxiliary device such as a headset or headphones, and signals for transmission are generated by the microphone 32. The portable electronic device 10 may also include other voice subsystems, such as a voice message recording subsystem, for example. Audio jack 35 is provided for receiving an audio accessory such as headphones, a headset, amplified speakers or amplified headphones, for example. Audio jack 35 may also receive other accessories such as a multi-media accessory including play, pause, stop and rewind buttons or a TV-out accessory that allows for connection of the portable electronic device to a TV, for example.

Only a limited number of device subsystems have been described. It will be appreciated by a person skilled in the art that additional subsystems corresponding to additional device features may also be connected to the processor 14.

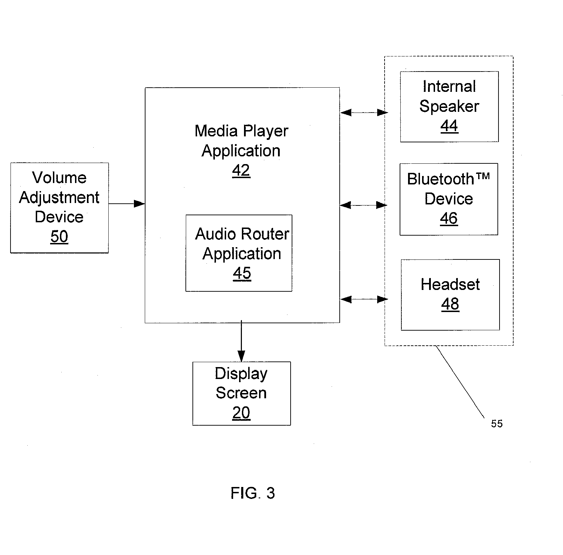

Referring to Figure 3, a media player application 42, which is stored on the portable electronic device 10 and executable by the processor 12, is in communication with audio sinks 55 of the portable electronic device 10 in order to output audio thereto. As shown in the embodiment of Figure 3, the audio sinks 55 include an internal speaker 44, a Bluetooth™ device 46 and a wired headset 48. Although not depicted in Figure 3, an audio file, which contains audio data, often encoded, in some machine-usable format, may also be stored in one or more memory elements on the portable electronic device 10. Alternatively, an audio file may be stored remotely from portable electronic device 10, and may be received by the portable electronic device 10 by, for example, the wireless network 12. Regardless of where the audio files are stored, audio files are processed by media player application 42 to produce audio output to one or more audio sinks 55. In some embodiments, media player application 42 can process audio files exclusively, and in other embodiments, media player application 42 can process other forms of media, such as video with an audio component.

It will be appreciated by a person skilled in the art that the media player application 42 may be any media player application that manages a set of volume levels for audio sinks and is capable of at least sending audio output.

The media player application 42 communicates with an audio router application 45, which is stored on the portable electronic device 10 and executable by the processor 12. The audio router application manages audio sink activation on the portable electronic device 10 and sends notifications to the media player application 42 when audio routing changes. The media player application 42 communicates with the audio router application 45 in order to query current audio routing and current volume level from the audio sinks 55.

In one embodiment, the audio router application 45 automatically switches a current audio routing from a current audio sink to a new audio sink upon connection of the new audio sink to the device 10. In another embodiment, the audio routing application 45 generates a list of audio sinks that are currently connected to the device 10 in a menu that is provided by the media player application 42. The audio router application 45 switches a current audio routing to a new audio routing based on user selection of a new audio sink.

It will be appreciated by a person skilled in the art that the media player application 42 may provide audio output to any internal or auxiliary audio sinks that communicate with the portable electronic device 10 via a wired or wireless connection. Examples of other audio sinks include: auxiliary speakers, additional internal speakers, headphones and car kits that allow hands-free operation of the portable electronic device while driving.

The media player application 42 is also in communication with a volume adjustment device 50 of the portable electronic device 10 in order to receive volume change notifications. In one embodiment, the volume adjustment device 50 includes a volume down button 52 and a volume up button 54 that are mounted in a housing 15 of the portable electronic device, as shown in Figure 2. The buttons 52, 54 may form part of the keypad 38 or may be separate, as shown. Electrical switches (not shown) are provided in communication with the volume down/up buttons 52, 54. Actuation of the volume down/up buttons 52, 54 generates signals that are sent via the processor 12 and received as volume change notifications by the media player application 42. Once received by the media player application 42, the volume change is applied to the audio sink by the audio router application 45 via a wired or wireless connection depending which audio sink is currently active.

In another embodiment, the volume adjustment device 50 is incorporated into one of the other input devices 36 provided on the portable electronic device 10. Alternatively, the volume adjustment device 50 may be a separate input device. In a further embodiment, the volume adjustment device 50 is located on the audio sink. The audio sink in this embodiment is capable of sending volume change requests to the portable electronic device 10 in response to actuation of the local volume adjustment device 50. The volume change requests may be sent wirelessly or through a wired connection to the portable electronic device 10.

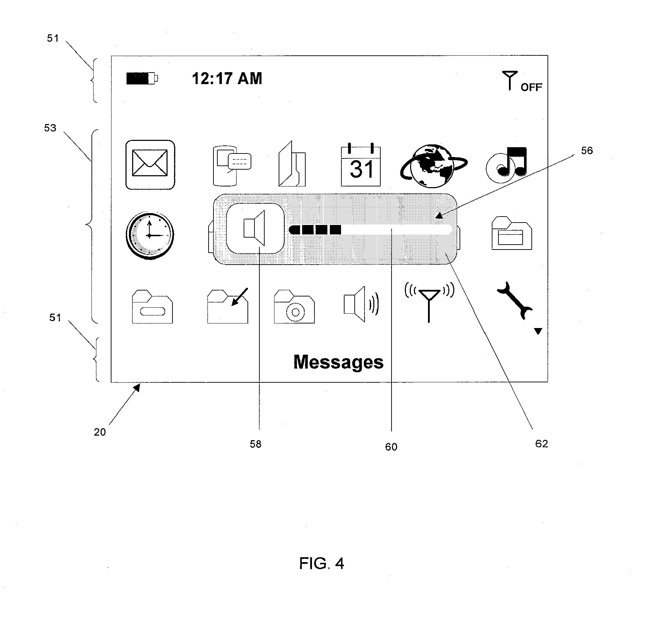

Referring to Figure 4, data that has been rendered for display by the processor 12 is shown on the display screen 20 of the portable electronic device 10. The data includes device status information 51 and icons 53, which represent software applications, folders and device settings, for example. A background image (not shown) may also be provided. The background image may be a default image that is provided by the manufacturer of the portable electronic device 10 or a personalized image that has been saved to the device 10 by the user. Other forms of data that may be on the display screen 20 of the portable electronic device 10 include video data, including video data that is synchronized with audio output.

The status information includes time, a new message indicator and battery and signal strength indicators. Other status information related to the device 10 may also be provided. The icons, when selected by the user, launch software applications that are stored on the device 10, navigate through information that is stored on the device or allow for modification of device settings.

Referring back to Figure 3, the media player application 42 communicates with the display screen 20 of the portable electronic device 10 to output an overlay 56, which provides the user with an indication of the audio sink that is currently active and the volume level that is associated with the audio sink. The overlay 56 is rendered for display by the processor 12 in response to a volume adjustment event. It will be appreciated by a person skilled in the art that when no volume adjustment event has occurred, the overlay 56 is not rendered for display. Volume adjustment events include: user actuation of the volume adjustment device 50, addition of an audio sink and removal of an audio sink. The overlay 56 may disappear, that is, the overlay 56 may be no longer rendered or superimposed, and the data that had been under the overlay may be re-rendered. Even if the data that had been under the overlay 56 comprised a blank screen, re-rendering might be advantageous to remove any vestige of the overlay 56. In some embodiments, the overlay 56 may disappear after a period of time, such as a few seconds. In other embodiments, the overlay 56 may disappear after a user supplies a command to the portable electronic device 10 to clear the overlay 56, or the overlay may disappear in response to another event such as activation of an alarm or receipt of an email message, for example, or any combination thereof. The overlay 56 may persist without disappearing for any length of time, and in some embodiments, the user may input a preference into the portable electronic device 10 as to how long the overlay 56 should persist before disappearing.

As shown in Figure 4, the overlay 56 is superimposed over the data on the display screen 20. The overlay 56 includes: an audio sink indicator 58, a volume indicator 60 and a background field 62, which functions to visually separate the audio sink indicator 58 and the volume indicator 60 from the data on the display screen 20. The depiction of overlay 56 is for illustrative purposes, and the concepts described herein are not limited to that particular depiction. In Figure 4, for example, the superimposed overlay 56 is effectively opaque. The concepts described herein include superimposition of a partially transparent overlay, such that icons, a background image or other the data on the display screen 20 could be perceived as being "seen through" the overlay. In addition, although the overlay 56 appears in Figure 4 as being rendered near the center of the display screen 20, the concepts described herein include rendering of the overlay anywhere on the display screen 20. The overlay may be rendered in a dedicated area of the display screen 20, that is, in a location in which no icons or other data routinely appear. Further, the overlay 56 is depicted with a background field 62 in the shape of a rounded rectangle, but the concepts described herein are not restricted to any particular shape or shapes.

In the example shown in Figure 4, the audio sink indicator 58 is a speaker symbol, which indicates to the device user that the audio sink that is currently active is the internal speaker 44, and the volume indicator 60 is a volume level indicator having a bar 64 that increases in length when the volume increases. The concepts described herein are not limited to use of a bar to indicate volume level. The volume indicator 60 may include a volume level indicator in the form of (for example) a color, or a number or a needle on a scale, or any combination thereof.

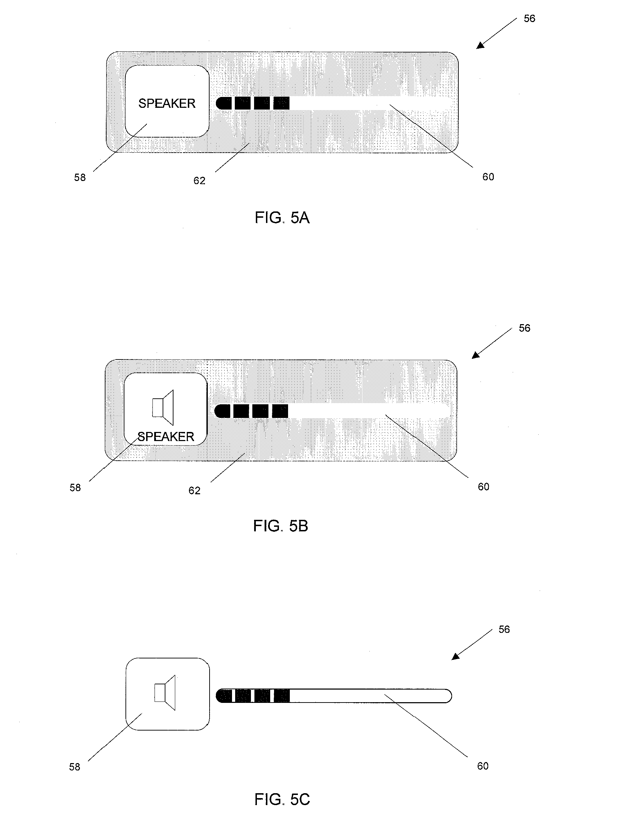

Figures 5A, 5B and 5C shown alternative embodiments of the overlay 56. In Figure 5A, instead of a symbol, the text "SPEAKER" is provided. It will be appreciated that any other text that identifies the audio sink to the user may alternatively be used. Figure 5B shows a combination of symbol and text. Figure 5C shows the overlay 56 including only the audio sink indicator 58 and the volume indicator 60. In this embodiment, the background field 62 has been removed.

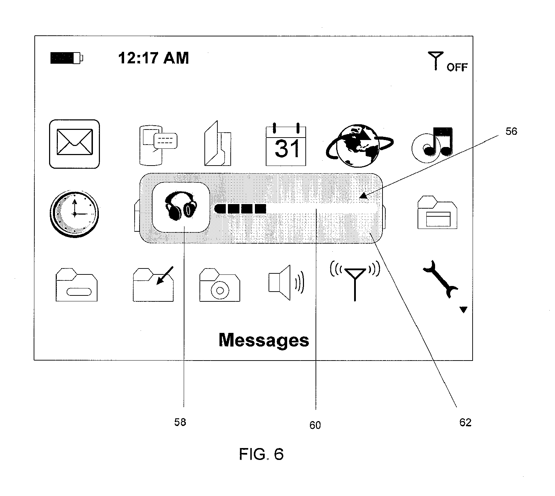

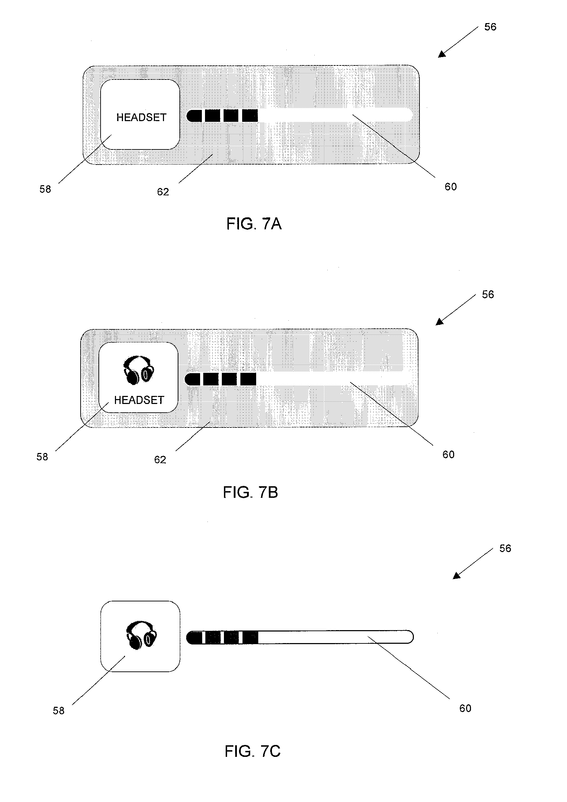

Referring to Figure 6, the audio sink indicator 58 is a headset symbol, which indicates to the device user that the audio sink that is currently active is the headset 48. Figures 7A, 7B and 7C shown alternative embodiments of the overlay 56. In Figure 7A, the audio sink indicator 58 is text. In Figure 7B, the audio sink indicator 58 is a combination of symbol and text. In Figure 5C, the overlay 56 includes only the audio sink indicator 58 and the volume indicator 60.

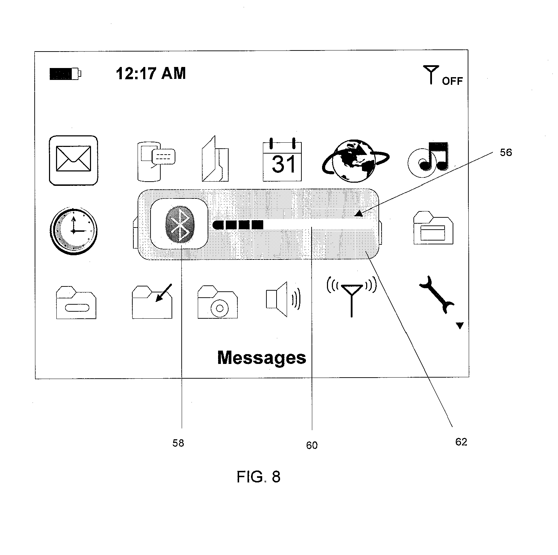

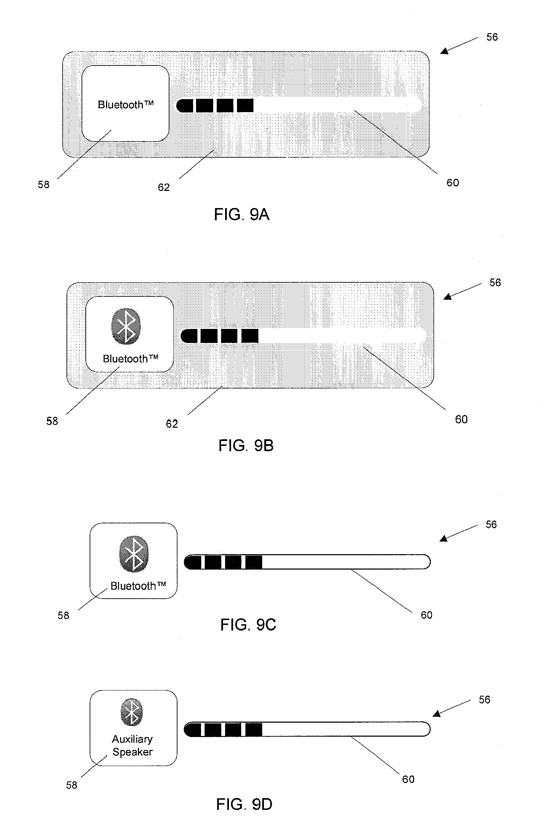

Referring to Figure 8, the audio sink indicator 58 is a Bluetooth™ symbol, which indicates to the device user that the audio sink that is currently active is a Bluetooth™ device 46. Figures 9A, 9B and 9C show alternative embodiments of the overlay 56. In Figure 9A, the audio sink indicator 58 is text. In Figure 9B, the audio sink indicator 58 is a combination of symbol and text. In Figure 9C, the overlay 56 includes only the audio sink indicator 58 and the volume indicator 60. The Bluetooth™ device symbol may be customized to visually identify which type of Bluetooth™ device is connected, as shown in Figure 9D, for example. Further, if the audio sink communicates with the portable electronic device 10 via a different type of short range communication, such as infrared, WiFi or wireless USB, the audio sink indicator 58 will be selected to indicate this accordingly.

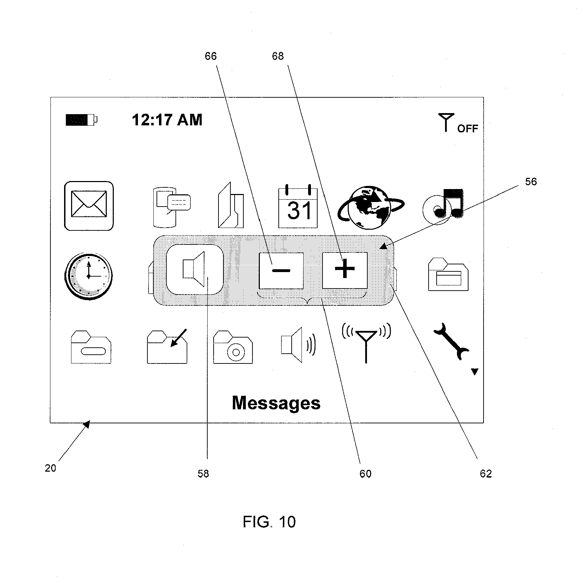

Referring to Figure 10, another embodiment of an overlay 56 is shown. In this embodiment, the volume indicator is a volume control indicator instead of a volume level indicator. A minus (-) symbol 66 and a plus (+) symbol 68 are visually modified to indicate a decrease in volume and an increase in volume, respectively, in response to actuation of the volume adjustment device 50 by the user. In one embodiment the visual modification is a brief flash to indicate to the user that the device 10 is handling the volume adjustment device 50. A volume control indicator may be useful in cases in which it is difficult to assess the volume level of an audio sink, but it is less difficult to assess whether the user is increasing or decreasing the level of the volume. In some embodiments, the volume indicator may include both a volume control indicator and of a volume level indicator. Although a minus (-) symbol 66 and a plus (+) symbol 68 are shown in the embodiment of Figure 10, it will be appreciated by a person skilled in the art that other symbols may be provided on the volume control indicator, such as a small circle and a larger circle, for example.

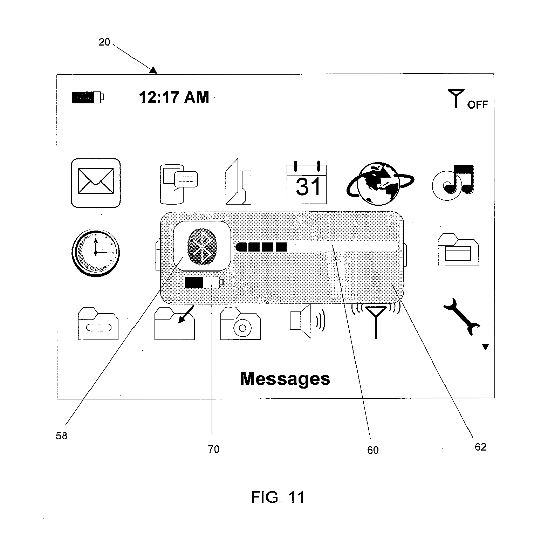

Referring to Figure 11, another embodiment of the overlay 56 is shown. In this embodiment, a power level indicator 70 is provided along with the audio sink indicator 58 and the volume indicator 60. As shown, the overlay 56 further includes the background field 62, however, this is optional. This embodiment is used when the audio sink is a Bluetooth™ device or other short range communication device to indicate the battery power level, or state of charge, of the audio sink. In one embodiment, the audio sink indicator 58 is rendered with a color to indicate the power level of the audio sink. For example, the audio sink indicator 58 may appear green when the battery of the audio sink is fully charged, the audio sink indicator 58 may appear yellow when the battery of the audio sink is partially charged and the audio sink indicator 58 may appear red when the battery of the audio sink has a low charge.

In one embodiment the portable electronic device 10 includes the volume adjustment device 50, which is in communication with the media player application 42 that is stored on the device 10 and in communication with the processor 12, and the processor 12. The processor 12 renders data for display on the display screen 20 of the device 10 and renders an overlay 56 for display on the display screen 20. The overlay 56 includes the volume indicator 60 and the audio sink indicator 58 and is superimposed over the data. An active audio sink and current volume level of the active audio sink are obtained from the media player application.

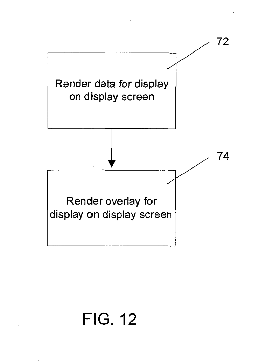

Referring to Figure 12, a method of operating the portable electronic device 10 is generally shown. At step 72, data is rendered for display on the display screen 20 of the portable electronic device 10. At step 74, the overlay 56, which includes the audio sink indicator 58 and the volume indicator 60, is rendered for display on the display screen 20. Step 72 is performed by the processor 12 in a first computer process and Step 74 is performed by the processor 12 in a second computer process. That is, the first computer process and the second computer process may generally be performed independently, though a user may perceive them as being performed together and simultaneously. Alternatively, output from the first computer process may be used as input for the second computer process so that re-rendering of the data surrounding the overlay 56 is not performed and thus computer processing time is reduced. As noted above, the processor 12 may optionally cause the overlay 56 to disappear after being rendered in response to an event or a command or a passage of time.

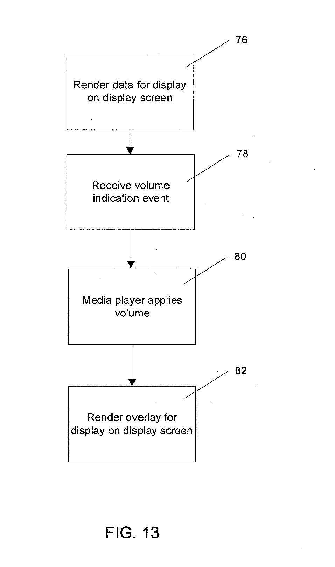

Referring to Figure 13, another method of operating the portable electronic device 10 is generally shown. At step 76, data is rendered for display on the display screen 20 of the portable electronic device 10. At step 78, a volume adjustment event is received by the processor 12 of the portable electronic device 10.

When the volume adjustment event is user actuation of the volume adjustment device 50, electrical switches generate signals that are sent to the media player application 42. The media player application 42 then responds by increasing or decreasing the volume of the currently playing media (step 80).

When the volume adjustment event is addition of an audio sink, an audio sink connect message is generated by the circuitry of the audio jack 35 of the portable electronic device 10 or by radio signals received by an antenna of the communications subsystem 40. The audio router application 45 responds to the connect message by applying current audio routing rules in order to determine if currently playing media should be routed to the new audio sink. The audio routing rules include logic statements that consider the audio source (media player, alert, ringtone, voice note, email attachment, for example) and the audio sink that is best suited to handle the audio source. Default routing rules may be overridden by user selection of the audio sink. If the audio router application 45 adopts the newly connected audio sink as the current audio sink, an audio sink change notification is sent by the audio router application 45. The notification is received by the media player application 42, which records the new audio routing. When the newly added audio sink is selected as the current audio sink, the last known volume, which is stored in flash memory 18 of the portable electronic device 10, of the newly added audio route is applied to the currently selected media being output from the media player application 42 (step 80).

When the volume adjustment event is the removal of an audio sink, an audio sink disconnect message is generated and the audio routing application 45 applies the audio routing rules to re-direct the currently playing media to a different audio sink. The last known volume for the new audio route is then applied to the currently selected media being output from the media player application 42 (step 80). It will be appreciated by a person skilled in the art that the overlay 56 is only displayed when the current audio sink is disconnected from the device 10. Removal of an audio sink that is not currently in use, for example removing a wired headset when the audio is being played by the internal speaker of the device 10, will not cause the overlay 56 to be displayed.

At step 82, the overlay 56, which includes the audio sink indicator 58 and the volume indicator 60, is rendered for display on the display screen 20 in response to the volume adjustment event.

The embodiments described herein, and variations thereof, may provide one of more advantages. They may assist users who switch between audio sinks and find that they have to adjust the volume and allow users to receive visual feedback as to which audio sink is activated as well as information about the volume of that audio sink. In addition, the concepts described above are adaptable to a variety of portable electronic devices and a variety of audio sinks. Further, various embodiments may be applied to instances in which the audio is part of a multimedia presentation, such as a video displayed with the audio.

The advantages of the embodiments described herein are particularly apparent when the volume of a previously selected audio sink was very high or very low. In the case where the volume level is very low on a headset, for example, and the user switches to an external speaker, for example, the volume output from the external speaker may be so low that the audio is imperceptible to the user. By visually indicating the current audio sink to the user and the outputting the previously stored volume, the user is not left wondering i) if the new audio sink has been correctly selected or ii) if the external speaker is working properly. Conversely, if the volume level is very high on an external speaker, for example, and the user switches to a headset, for example, the user does not experience the discomfort associated with high volume being perceived at very close range.

Specific embodiments have been shown and described herein. However, modifications and variations may occur to those skilled in the art. All such modifications and variations are believed to be within the scope and sphere of the present embodiments.

## Claims

1. A method comprising:
rendering data for display on a display screen (20) of a portable electronic device (10); and
rendering an overlay (56) for display on the display screen (20), the overlay (56) being superimposed over the data and comprising a volume indicator (60) and an audio sink indicator (58).

2. A method as claimed in claim 1, wherein the overlay (56) is rendered in response to a volume adjustment event.

3. A method as claimed in claim 2, wherein the volume adjustment event is one of:
addition of an audio sink (55) and removal of an audio sink (55).

4. A method as claimed in claim 2, wherein the volume adjustment event is actuation of a button (52,54) of the portable electronic device (10).

5. A method as claimed in any of claims 1 to 4, wherein the volume indicator (60) is a volume level indicator.

6. A method as claimed in any of claims 1 to 5, wherein the volume indicator (60) is a volume control indicator.

7. A method as claimed in any of claims 1 to 6, wherein the overlay comprises a power level indicator (70) corresponding to a wireless audio sink.

8. A method as claimed in claim 7, wherein the wireless audio sink is a Bluetooth™ device.

9. A method as claimed in any of claims 1 to 8, wherein the audio sink indicator (58) is a symbol.

10. A method as claimed in any of claims 1 to 9, wherein the audio sink indicator (58) is text.

11. A method as claimed in any of claims 1 to 10, wherein the audio sink (58) indicator is a combination of symbol and text.

12. A method as claimed in any of claims 1 to 11, wherein the ovenay (56) comprises a background field (62).

13. A method as claimed in claim 2, wherein a volume of media being output from an audio sink is adjusted in response to the volume adjustment event.

14. A method as claimed in claim 13, wherein the media is one of: an audio file stored on the portable electronic device (10), an audio file received by the portable electronic device (10).

15. A method as claimed in any of claims 1 to 14, wherein rendering data for display on a display screen (20) of the portable electronic device (10) is performed in a first computer process and rendering the overlay (56) for display on the display screen (20) is performed in a second computer process.

16. A method as claimed in any of claims 1 to 15, comprising: after rendering the overlay (56), re-rendering the data to cause the overlay (56) to disappear.

17. A computer-readable medium comprising instructions executable on a processor (14) of the portable electronic device (10) for implementing the method of claim 1.

18. A portable electronic device (10) comprising:
a processor (14) for rendering data for display on a display screen (20) of the portable electronic device (10) and rendering an overlay (56) for display on the display screen (20), the overlay (56) comprising a volume indicator (60) and an audio sink indicator (58) and being superimposed over the data; and
a volume adjustment device (50) in communication with the processor (14), the volume adjustment device (50) for communicating with a media player application (42) stored in a memory (18) of the portable electronic device (10);
wherein active audio sink and current volume level of the active audio sink is obtained from the media player application (42).

## Amended claims

### Amended claims in accordance with Rule 137(2) EPC.

**1.** A method comprising:
rendering data for display on a display screen (20) of a portable electronic device (10); and
rendering an overlay (56) for display on the display screen (20), the overlay (56) being superimposed over the data and comprising a volume indicator (60) and an audio sink indicator (58), wherein the overlay (56) is rendered in response to a volume adjustment event, and wherein the volume adjustment event is one of: addition of an audio sink (55) and removal of an audio sink (55).

**2.** A method as claimed in claim 1, wherein the volume indicator (60) is a volume level indicator.

**3.** A method as claimed in any of claims 1 or 2, wherein the volume indicator (60) is a volume control indicator.

**4.** A method as claimed in any of claims 1 to 3, wherein the overlay comprises a power level indicator (70) corresponding to a wireless audio sink.

**5.** A method as claimed in claim 4, wherein the wireless audio sink is a Bluetooth™ device.

**6.** A method as claimed in any of claims 1 to 5, wherein the audio sink indicator (58) is a symbol.

**7.** A method as claimed in any of claims 1 to 6, wherein the audio sink indicator (58) is text.

**8.** A method as claimed in any of claims 1 to 7, wherein the audio sink (58) indicator is a combination of symbol and text.

**9.** A method as claimed in any of claims 1 to 8, wherein the overlay (56) comprises a background field (62).

**10.** A method as claimed in claim 1, wherein a volume of media being output from an audio sink is adjusted in response to the volume adjustment event.

**11.** A method as claimed in claim 10, wherein the media is one of: an audio file stored on the portable electronic device (10), an audio file received by the portable electronic device (10).

**12.** A method as claimed in any of claims 1 to 11, wherein rendering data for display on a display screen (20) of the portable electronic device (10) is performed in a first computer process and rendering the overlay (56) for display on the display screen (20) is performed in a second computer process.

**13.** A method as claimed in any of claims 1 to 12, comprising: after rendering the overlay (56), re-rendering the data to cause the overlay (56) to disappear.

**14.** A computer-readable medium comprising instructions executable on a processor (14) of the portable electronic device (10) for implementing the method of claim 1.

**15.** A portable electronic device (10) comprising:
a processor (14) for rendering data for display on a display screen (20) of the portable electronic device (10) and rendering an overlay (56) for display on the display screen (20), the overlay (56) comprising a volume indicator (60) and an audio sink indicator (58) and being superimposed over the data, wherein the overlay (56) is rendered in response to a volume adjustment event, and
wherein the volume adjustment event is one of: addition of an audio sink (55) and removal of an audio sink (55); and
a volume adjustment device (50) in communication with the processor (14), the volume adjustment device (50) for communicating with a media player application (42) stored in a memory (18) of the portable electronic device (10);
wherein active audio sink and current volume level of the active audio sink is obtained from the media player application (42)
